(19) Europäisches Patentamt
European Patent Office
Office européen des brevets

(11) **EP 4 336 581 A1**

(12) **EUROPEAN PATENT APPLICATION**
published in accordance with Art. 153(4) EPC

(43) Date of publication:
**13.03.2024 Bulletin 2024/11**

(21) Application number: **22837307.2**

(22) Date of filing: **31.03.2022**

(51) International Patent Classification (IPC):
*H01M 4/13* (2010.01)     *H01G 11/24* (2013.01)
*H01G 11/52* (2013.01)     *H01M 10/04* (2006.01)
*H01M 10/052* (2010.01)    *H01M 50/434* (2021.01)
*H01M 50/443* (2021.01)    *H01M 50/451* (2021.01)
*H01M 50/489* (2021.01)

(52) Cooperative Patent Classification (CPC):
H01G 11/24; H01G 11/52; H01M 4/13;
H01M 10/04; H01M 10/052; H01M 50/434;
H01M 50/443; H01M 50/451; H01M 50/489;
Y02E 60/10

(86) International application number:
**PCT/JP2022/016439**

(87) International publication number:
**WO 2023/281886 (12.01.2023 Gazette 2023/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.07.2021   JP 2021111584**

(71) Applicant: **GS Yuasa International Ltd.
Kisshoin, Minami-ku,
Kyoto-shi, Kyoto 601-8520 (JP)**

(72) Inventor: **OKAJIMA Takashi
Kyoto-shi, Kyoto 601-8520 (JP)**

(74) Representative: **Isarpatent
Patent- und Rechtsanwälte
Barth Hassa Peckmann & Partner mbB
Friedrichstraße 31
80801 München (DE)**

(54) **POWER STORAGE ELEMENT AND POWER STORAGE DEVICE**

(57)     An energy storage device according to an aspect of the present invention includes: a positive electrode; a negative electrode; and a separator disposed between the positive electrode and the negative electrode, in which the positive electrode includes a positive active material layer containing a positive active material having an average primary particle size of 1.0 pm or more, and a creep strain in the separator after a load of 2 MPa is held for 24 hours at a temperature of 65°C is 11% or more and 28% or less.

Fig. 1

**Description**

TECHNICAL FIELD

The present invention relates to an energy storage device and an energy storage apparatus.

BACKGROUND ART

Nonaqueous electrolyte secondary batteries typified by lithium ion secondary batteries are widely used in electronic devices such as personal computers and communication terminals, motor vehicles, and the like since these secondary batteries have a high energy density. In addition, capacitors such as lithium ion capacitors and electric double-layer capacitors, energy storage devices with electrolytes other than nonaqueous electrolyte used, and the like are also widely used as energy storage devices other than nonaqueous electrolyte secondary batteries.

As a positive active material of the energy storage device, particulate active materials such as particles of a lithium transition metal composite oxide are widely used. Patent Document 1 describes a lithium secondary battery characterized in that a primary particle size of a positive active material is 1 pm or less.

PRIOR ART DOCUMENT

PATENT DOCUMENT

Patent Document 1: JP-A-2009-199793

SUMMARY OF THE INVENTION

PROBLEMS TO BE SOLVED BY THE INVENTION

The energy storage device is required to have a discharge capacity that is less likely to decrease even when charge-discharge is repeated, that is, a high capacity retention ratio.

An object of the present invention is to provide an energy storage device and an energy storage apparatus having a high capacity retention ratio after a charge-discharge cycle.

MEANS FOR SOLVING THE PROBLEMS

An energy storage device according to an aspect of the present invention includes: a positive electrode; a negative electrode; and a separator disposed between the positive electrode and the negative electrode, in which the positive electrode includes a positive active material layer containing a positive active material having an average primary particle size of 1.0 pm or more, and a creep strain in the separator after a load of 2 MPa is held for 24 hours at a temperature of 65°C is 11% or more and 28% or less.

An energy storage apparatus according to another aspect of the present invention includes the energy storage device according to an aspect of the present invention and a pressure member.

ADVANTAGES OF THE INVENTION

According to one aspect of the present invention, it is possible to provide an electrolyte energy storage device and an energy storage apparatus having a high capacity retention ratio after a charge-discharge cycle.

BRIEF DESCRIPTION OF THE DRAWINGS

Fig. 1 is a schematic cross-sectional view illustrating an embodiment of an electrode assembly included in an energy storage device.
Fig. 2 is a see-through perspective view illustrating an embodiment of the energy storage device.
Fig. 3 is a schematic diagram illustrating an embodiment of an energy storage apparatus configured by assembling a plurality of the energy storage devices.

MODE FOR CARRYING OUT THE INVENTION

First, an outline of an energy storage device disclosed in the present specification will be described.

An energy storage device according to an aspect of the present invention includes: a positive electrode; a negative electrode; and a separator disposed between the positive electrode and the negative electrode, in which the positive electrode includes a positive active material layer containing a positive active material having an average primary particle size of 1.0 pm or more, and a creep strain in the separator after a load of 2 MPa is held for 24 hours at a temperature of 65°C is 11% or more and 28% or less.

The energy storage device has a high capacity retention ratio after a charge-discharge cycle. Although the reason therefor is not clear, the following reason is presumed. The positive active material having a large average primary particle size is less likely to cause pulverization due to cracking or the like associated with repeated charge-discharge as compared with the positive active material having a small average primary particle size, and thus it is considered that the capacity retention ratio after the charge-discharge cycle can be increased. However, since the positive active material having a large average primary particle size has large expansion and contraction associated with charge-discharge, the capacity retention ratio may not be sufficiently high depending on physical properties of the separator disposed between the positive electrode and the negative electrode. Specifically, when the separator is too hard, it is difficult for the separator to be compressed, so that the positive active material layer is excessively compressed at the time of expansion of the positive active material, and the number of voids in the positive active material layer decreases. When the number of voids in the positive active material layer decreases, an electrolyte present in the voids of the positive active material layer is likely to be depleted, so that the capacity retention ratio is likely to decrease with the charge-discharge cycle. On the other hand, when the separator is too soft, the separator is easily compressed, and thus, when the positive active material is shrunk, the number of voids in the positive active material layer increases. When the number of voids in the positive active material layer increases, a contact between the positive active materials or between the positive active material and another conductive material deteriorates, and electron conductivity of the positive active material layer decreases, so that the capacity retention ratio tends to decrease with the charge-discharge cycle. On the other hand, when the separator has suitable softness, the ease of compression of the separator is suitable, so that depletion of the electrolyte in the voids of the positive active material layer due to charge-discharge and a decrease in the electron conductivity of the positive active material layer are suppressed. In particular, in the energy storage device according to an aspect of the present invention, the softness of the separator is specified by the creep strain which is considered to be able to reproduce a state of the separator in the energy storage device compressed for a long time. That is, it is considered that when the separator has a creep strain of 11% or more and 28% or less after holding a load of 2 MPa at a temperature of 65°C for 24 hours, the separator can exhibit suitable softness in the energy storage device such that both a decrease in voids in the positive active material layer in a charged state and an increase in voids in the positive active material layer in a discharged state can be suppressed. For this reason, in the energy storage device using the positive active material having an average primary particle size of 1.0 pm or more and the separator having a creep strain of 11% or more and 28% or less after holding a load of 2 MPa at a temperature of 65°C for 24 hours, it is presumed that the capacity retention ratio after the charge-discharge cycle is high.

The "average primary particle size" of the positive active material refers to an average value of particle sizes of arbitrary fifty primary particles constituting the positive active material observed by a scanning electron microscope (SEM). The primary particles are particles in which no grain boundary is observed in appearance in the observation with the SEM. The particle size of the primary particles is determined as follows. The shortest diameter passing through the center of the minimum circumscribed circle of the primary particle is defined as a minor axis, and the diameter passing through the center and orthogonal to the minor axis is defined as a major axis. The average value of the major axis and the minor axis is defined as the particle size. When there are two or more shortest diameters, a shortest diameter with the longest orthogonal diameter is defined as a minor axis.

The creep strain (%) in the separator after holding a load of 2 MPa at a temperature of 65°C for 24 hours is a creep strain when a load is applied in a thickness direction of the separator, and specifically, a value measured by the following method. First, a thickness (A) of a sample obtained by stacking two hundreds dry separators and not applied with a load at a temperature of 65°C is measured. Next, the sample is compressed by pressing a cylindrical indenter having a diameter of 50 mm against the sample in the thickness direction of the sample using a load cell type creep tester (manufactured by MYS-TESTER Company Limited) at a temperature of 65°C. After the compressive stress reaches 2 MPa, the sample is held in this state for 24 hours. A thickness (B) of the sample after holding the state in which the stress is applied for 24 hours is measured while holding the state. From the thickness (A) of the sample in a state where no load is applied and the thickness (B) of the sample after a load of 2 MPa is held at a temperature of 65°C for 24 hours, the creep strain is determined by the following formula 1.

$$\text{Creep strain } (\%) = \{(A - B)/A\} \times 100 \quad \dots 1$$

The positive active material preferably corresponds to secondary particles having a ratio of an average secondary particle size to the average primary particle size of 5 or less, or primary particles that are not substantially aggregated (hereinafter, the "secondary particles having a ratio of the average secondary particle size to the average primary particle size of 5 or less, and the primary particles that are not substantially aggregated" are also collectively referred to as a "single particle-based particles"). When the positive active material corresponds to the single particle-based particles, there is an advantage that cracking is particularly less likely to occur, and on the other hand, expansion and contraction associated with charge-discharge become larger. Therefore, when one aspect of the present invention is applied to an energy storage device in which single particle-based particles are used as the positive active material, an effect that an energy storage device having a high capacity retention ratio after the charge-discharge cycle can be provided is more remarkably generated.

The "average secondary particle size" of the positive active material refers to a value at which a volume-based integrated distribution calculated in accordance with JIS-Z-8819-2 (2001) is 50% (D50: median size) based on a particle size distribution measured by a laser diffraction/scattering method for a diluted solution obtained by diluting the positive active material with a solvent in accordance with JIS-Z-8815 (2013).

"The primary particles that are not substantially aggregated" refer to a plurality of primary particles that are present independently without being aggregated, or a primary particle and another primary particle that are not generally directly bound to each other, when the primary particles are observed with a SEM.

Preferably, the separator includes an inorganic particle layer, and the positive active material layer and the inorganic particle layer are arranged so as to face each other. When the separator has the inorganic particle layer disposed so as to face the positive active material layer, the heat resistance, oxidation resistance and the like of the separator can be enhanced. On the other hand, in such a case, since the inorganic particle layer is disposed, usually, the positive active material layer is easily compressed at the time of expansion of the positive active material, and the number of voids in the positive active material layer is easily reduced. Therefore, when one aspect of the present invention is applied to an energy storage device in which the separator includes the inorganic particle layer and the positive active material layer and the inorganic particle layer are arranged to face each other, an effect that an energy storage device having a high capacity retention ratio after the charge-discharge cycle can be provided is more remarkably generated.

The average primary particle size of the positive active material is preferably 6.0 pm or less. When the average primary particle size of the positive active material is 6.0 pm or less, the effect of being able to provide the energy storage device having a high capacity retention ratio after the charge-discharge cycle is more remarkably produced, and furthermore, while the production or handling of the positive active material is facilitated, output performance can be enhanced.

It is preferable that the electrode assembly is in a state where a load of 0.1 MPa or more is applied in a stacking direction. When the electrode assembly is in a state where a load of 0.1 MPa or more is applied in the stacking direction, the electron conductivity in the positive active material layer or between the positive active material layer and the positive substrate or the like can be enhanced, so that the effect of being able to provide the energy storage device having a high capacity retention ratio after the charge-discharge cycle is more remarkably generated.

An energy storage apparatus according to another aspect of the present invention includes the energy storage device according to an aspect of the present invention and a pressure member. Since the energy storage apparatus includes the energy storage device having a high capacity retention ratio after the charge-discharge cycle and the pressure member, the capacity retention ratio after the charge-discharge cycle is high.

An energy storage device according to an embodiment of the present invention, an energy storage apparatus, a method for manufacturing the energy storage device, and other embodiments will be described in detail. The names of the constituent members (constituent elements) used in the embodiments may be different from the names of the constituent members (constituent elements) used in the background art.

<Energy storage device>

An energy storage device according to an embodiment of the present invention includes: an electrode assembly including a positive electrode, a negative electrode, and a separator; an electrolyte; and a case that houses the electrode assembly and the electrolyte. The electrode assembly is usually a stacked type in which a plurality of positive electrodes and a plurality of negative electrodes are stacked with a separator interposed therebetween, or a wound type in which a positive electrode and a negative electrode are wound in a state of being stacked with a separator interposed therebetween. The electrolyte is present with the positive electrode, negative electrode, and separator impregnated with the electrolyte. A nonaqueous electrolyte secondary battery (hereinafter, also simply referred to as a "secondary battery") will be described as an example of the energy storage device.

(Positive electrode)

The positive electrode has a positive substrate and a positive active material layer disposed directly on the positive substrate or over the positive substrate with an intermediate layer interposed therebetween.

The positive electrode substrate has conductivity. Whether the positive substrate has "conductivity" or not is determined with the volume resistivity of $10^{-2}$ $\Omega$ ·cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, A1N30, and the like specified in JIS-H-4000 (2014) or JIS-H-4160 (2006).

The average thickness of the positive electrode substrate is preferably 3 pm or more and 50 pm or less, more preferably 5 pm or more and 40 pm or less, still more preferably 8 pm or more and 30 pm or less, and particularly preferably 10 pm or more and 25 pm or less. By setting the average thickness of the positive substrate to the above range, it is possible to enhance the energy density per volume of a secondary battery while increasing the strength of the positive substrate.

The intermediate layer is a layer arranged between the positive electrode substrate and the positive active material layer. The intermediate layer includes a conductive agent such as carbon particles to reduce contact resistance between the positive substrate and the positive active material layer. The configuration of the intermediate layer is not particularly limited, and includes, for example, a binder and a conductive agent.

The positive active material layer includes a positive active material. The positive active material layer contains optional components such as a conductive agent, a binder, a thickener, a filler, or the like as necessary.

The positive active material is not particularly limited as long as the positive active material has an average primary particle size of 1.0 pm or more. The average primary particle size of the positive active material is preferably 1.5 pm or more and 6.0 pm or less, more preferably 1.6 pm or more and 5.5 pm or less in some cases, more preferably 1.8 pm or more and 5.0 pm or less, still more preferably 1.9 pm or more and 4.0 pm or less in some cases, and still more preferably 2.0 pm or more and 3.0 pm or less. When the average primary particle size of the positive active material is equal to or greater than the lower limit, the capacity retention ratio after charge-discharge cycles can be increased. On the other hand, when the average primary particle size of the positive active material is the above upper limit or less, the production or handling of the positive active material becomes easy, and the output performance can be enhanced. The average primary particle size of the positive active material can be equal to or greater than any of the above lower limits and equal to or less than any of the above upper limits.

The positive active material having an average primary particle size of 1.0 pm or more can be produced by a known method, and the average primary particle size of the positive active material can be controlled by production conditions. For example, in the process of producing the positive active material, crystals of the plurality of primary particles can be grown to increase the particle size by increasing the firing temperature or prolonging the firing time. In addition, for the positive active material, a commercially available product may be used.

The average secondary particle size of the positive active material is, for example, preferably 1 pm or more and 10 pm or less, more preferably 1.5 pm or more and 5 pm or less, still more preferably 2 pm or more and 4 pm or less. By setting the average secondary particle size of the positive active material to be equal to or greater than the lower limit, the positive active material is easily manufactured or handled. By setting the average secondary particle size of the positive active material to be equal to or less than the upper limit, the electron conductivity of the positive active material layer is improved, and the output performance is improved. Furthermore, by setting the average secondary particle size of the positive active material to be equal to or less than the upper limit, the number of primary particles constituting the secondary particles can be reduced, so that grain boundaries between the primary particles are reduced, and pulverization can be made more difficult to occur. This makes it possible to further increase the capacity retention ratio after the charge-discharge cycle.

A crusher, a classifier, or the like is used to obtain the positive active material in a predetermined average secondary particle size. Examples of a crushing method include a method in which a mortar, a ball mill, a sand mill, a vibratory ball mill, a planetary ball mill, a jet mill, a counter jet mill, a whirling airflow type jet mill, or a sieve or the like is used. At the time of crushing, wet-type crushing in coexistence of water or an organic solvent such as hexane can also be used. As a classification method, a sieve or a wind force classifier or the like is used based on the necessity both in dry manner and in wet manner.

The positive active material preferably corresponds to the single particle-based particles. An example of the single particle-based particles includes secondary particles A having a ratio of the average secondary particle size to the average primary particle size of 5 or less. The ratio of the average secondary particle size to the average primary particle size is preferably 4 or less, more preferably 3 or less, and still more preferably 2 or less. The ratio of the average secondary particle size to the average primary particle size of the secondary particles A is equal to or less than the upper limit mentioned above, thereby allowing advantages of the single particle-based particles to be sufficiently brought, such as the fact that cracks and the like are less likely to be generated.

The lower limit of the ratio of the average secondary particle size to the average primary particle size of the secondary particles A may be 1. From the difference between the method for measuring the average primary particle size and the method for measuring the average secondary particle size, the lower limit of the ratio of the average secondary particle size to the average primary particle size of the secondary particles A may be less than 1, for example, 0.9.

Other examples of the single particle-based particles include primary particles B that are not substantially aggregated (particles that are each a primary particle present alone). Such primary particles B can also sufficiently exhibit the advantage of the single particle-based particles that cracking and the like hardly occur. The secondary particles A and the primary particles B may be mixed. In addition, secondary particles other than the single particle-based particles may be further mixed. For example, of the arbitrary fifty positive active material particles observed with the SEM, the number of primary particles B is preferably more than twenty five, more preferably thirty or more, and still more preferably forty or more.

The single particle-based particles can be produced by any known method, and a commercially available product may be used for the single-particle particles. As described above, in the process of producing the positive active material, increasing the firing temperature or prolonging the firing time causes the crystals of the plurality of primary particles to grow to increase the particle size, thereby allowing single particle-based particles to be obtained. Alternatively, the single particle-based particles can be obtained by crushing the secondary particles.

The type of the positive active material can be appropriately selected from known positive active materials. As a positive active material for a lithium ion secondary battery, a material capable of storing and releasing lithium ions is normally used. Examples of the positive active material include lithium-transition metal composite oxides that have an $\alpha$-NaFeO$_2$-type crystal structure, lithium-transition metal composite oxides that have a spinel-type crystal structure, polyanion compounds, chalcogenides, and sulfur. Examples of the lithium-transition metal composite oxides that have an $\alpha$-NaFeO$_2$-type crystal structure include Li[Li$_x$Ni$_{(1-x)}$]O$_2$ ($0 \leq x < 0.5$), Li[Li$_x$Ni$_y$Co$_{(1-x-\gamma)}$]O$_2$ ($0 < x < 0.5$, $0 < \gamma < 1$, $0<1-x-\gamma$), Li[Li$_x$Co$_{(1-x)}$]O$_2$ ($0 \leq x < 0.5$), Li[Li$_x$Ni$_\gamma$Mn$_{(1-x-\gamma)}$]O$_2$ ($0 \leq x < 0.5$, $0 < \gamma < 1$, $0 < 1-x-\gamma$), Li[Li$_x$Ni$_\gamma$Mn$_\beta$Co$_{(1-x-\gamma-\beta)}$]O$_2$ ($0 \leq x < 0.5$, $0 < \gamma$, $0 < B$, $0.5 < \gamma + \beta < 1$, $0 < 1-x-\gamma-\beta$), and Li[Li$_x$Ni$_\gamma$Co$_\beta$Al$_{(1-x-\gamma-\beta)}$]O$_2$ ($0 \leq x < 0.5$, $0 < \gamma$, $0 < \beta$, $0.5 < \gamma + \beta < 1$, $0 < 1-x-\gamma-\beta$). Examples of the lithium-transition metal composite oxides that have a spinel-type crystal structure include Li$_x$Mn$_2$O$_4$ and Li$_x$Ni$_\gamma$Mn$_{(2-\gamma)}$O$_4$. Examples of the polyanion compounds include LiFePO$_4$, LiMnPO$_4$, LiNiPO$_4$, LiCoPO$_4$, Li$_3$V$_2$(PO$_4$)$_3$, Li$_2$MnSiO$_4$, and Li$_2$CoPO$_4$F. Examples of the chalcogenides include a titanium disulfide, a molybdenum disulfide, and a molybdenum dioxide. Some of atoms or polyanions in these materials may be substituted with atoms or anion species composed of other elements. The surfaces of these materials may be coated with other materials. In the positive active material layer, one of these materials may be used singly, or two or more thereof may be used in mixture.

The positive active material is preferably a lithium transition metal composite oxide, more preferably a lithium transition metal composite oxide containing at least one of nickel, cobalt and manganese, still more preferably a lithium transition metal composite oxide containing at least two of nickel, cobalt and manganese, and even more preferably a lithium transition metal composite oxide containing nickel, cobalt and manganese. The lithium transition metal composite oxide preferably has an $\alpha$-NaFeO$_2$-type crystal structure. By using such a lithium transition metal composite oxide, the energy density can be increased, and the like. On the other hand, a conventional lithium transition metal composite oxide generally used as a positive active material is often secondary particles formed by aggregation of primary particles having an average primary particle size of less than 1.0 pm from the viewpoint of, for example, widening the reaction area.

The lithium transition metal composite oxide is preferably a compound represented by the following formula 2.

$$\text{Li}_{1+\alpha}\text{Me}_{1-\alpha}\text{O}_2 \ ... \qquad 2$$

In the formula 2, Me is a metal element (excluding Li) including at least one of Ni, Co, and Mn. The condition of $0 \leq \alpha < 1$ is met.

Me in the formula 2 preferably includes at least two of Ni, Co, and Mn, more preferably includes Ni, Co, and Mn, and still more preferably substantially includes three elements of Ni, Co and Mn. Me may, however, contain other metal elements. Me is also preferably a transition metal element containing at least one of Ni, Co, and Mn.

From the viewpoint of further increasing electric capacity and the like, a preferred content (composition ratio) of each constituent element in the compound represented by the formula 2 is as follows. The molar ratio is equal to the atomic number ratio.

In the formula 2, the lower limit of the molar ratio (Ni/Me) of Ni to Me is preferably 0.1, and more preferably 0.2 or 0.3 in some cases. On the other hand, the upper limit of this molar ratio (Ni/Me) is preferably 0.9, and more preferably 0.8, 0.7, 0.6, 0.5, or 0.4 in some cases.

In the formula 2, the lower limit of the molar ratio of Co to Me (Co/Me) is preferably 0.05, and more preferably 0.1, 0.2, or 0.3 in some cases. On the other hand, the upper limit of the molar ratio (Co/Me) is preferably 0.7, and more preferably 0.5 or 0.4 in some cases.

In the formula 2, the lower limit of the molar ratio of Mn to Me (Mn/Me) is preferably 0.05, and more preferably 0.1, 0.2, or 0.3 in some cases. On the other hand, the upper limit of the molar ratio (Mn/Me) is preferably 0.6, and more preferably 0.5 or 0.4 in some cases.

In the formula 2, the upper limit of the molar ratio of Li to Me (Li/Me), i.e. $(1+\alpha)/(1-\alpha)$ is preferably 1.6, and more preferably 1.4 or 1.2 in some cases.

A composition ratio of the lithium transition metal composite oxide refers to a composition ratio when a completely discharged state is provided by the following method. First, the energy storage device is subjected to constant current discharge at a discharge current of 0.05 C to the lower limit voltage under normal usage. The term "under normal usage" means use of the energy storage device while employing discharge conditions recommended or specified in the energy storage device. After the battery is disassembled to take out the positive electrode, a test battery using metal Li as the counter electrode is assembled, constant current discharge is performed at a discharge current of 10 mA per 1 g of a positive active material until the positive potential reaches 3.0 V vs. Li/Li$^+$, and the positive electrode is adjusted to the completely discharged state. The battery is disassembled again, and the positive electrode is taken out. Components (electrolyte and the like) attached on the positive electrode taken out are sufficiently washed off with dimethyl carbonate and is dried at room temperature for 24 hours, and the lithium-transition metal composite oxide of the positive active material is then collected. The collected lithium transition metal composite oxide is subjected to measurement. Operations from disassembly of the energy storage device to collection of the lithium-transition metal composite oxide for measurement are performed in an argon atmosphere at a dew point of -60°C or lower.

Examples of suitable lithium transition metal composite oxides include $LiNi_{1/3}Co_{1/3}Mn_{1/3}O_2$, $LiNi_{3/5}Co_{1/5}Mn_{1/5}O_2$, $LiNi_{1/2}Co_{1/5}Mn_{3/10}O_2$, $LiNi_{1/2}Co_{3/10}Mn_{1/5}O_2$, $LiNi_{8/10}Co_{1/10}Mn_{1/10}O_2$.

The content of the positive active material in the positive active material layer is preferably 50% by mass or more and 99% by mass or less, more preferably 70% by mass or more and 98% by mass or less, and still more preferably 80% by mass or more and 95% by mass or less. By setting the content of the positive active material in the above range, it is possible to achieve both high energy density and productivity of the positive active material layer.

The conductive agent is not particularly limited as long as it is a conductive material. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be used in mixture. In addition, these materials may be used in combination. For example, a material obtained by compositing carbon black with CNT may be used. Among them, carbon black is preferable, an in particular, acetylene black is preferable, from the viewpoint of electron conductivity and coatability.

The content of the conductive agent in the positive active material layer is preferably 1% by mass or more and 10% by mass or less, more preferably 3% by mass or more and 9% by mass or less. By setting the content of the conductive agent in the above range, the energy density of the secondary battery can be enhanced.

Examples of the binder include: thermoplastic resins such as fluororesin (polytetrafluoroethylene (PTFE), polyvinylidene fluoride (PVDF), etc.), polyethylene, polypropylene, polyacryl, and polyimide; elastomers such as ethylene-propylene-diene rubber (EPDM), sulfonated EPDM, styrenebutadiene rubber (SBR), and fluororubber; and polysaccharide polymers.

The content of the binder in the positive active material layer is preferably 1% by mass or more and 10% by mass or less, more preferably 2% by mass or more and 9% by mass or less. By setting the content of the binder in the above range, the active material can be stably held.

Examples of the thickener include polysaccharide polymers such as carboxymethylcellulose (CMC), and methylcellulose. When the thickener has a functional group that is reactive with lithium and the like, the functional group may be deactivated by methylation or the like in advance.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

The positive active material layer may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Nb, or W as a component other than the positive active material, the conductive agent, the binder, the thickener, and the filler.

(Negative electrode)

The negative electrode has a negative substrate and a negative active material layer disposed directly on the negative substrate or over the negative substrate with an intermediate layer interposed therebetween. The configuration of the intermediate layer is not particularly limited, and can be selected from the configurations exemplified for the positive electrode, for example.

The negative substrate has conductivity. As the material of the negative substrate, a metal such as copper, nickel, stainless steel, nickel-plated steel, or aluminum, an alloy thereof, a carbonaceous material, or the like is used. Among these metals and alloys, copper or a copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include rolled copper foils and electrolytic copper foils.

The average thickness of the negative substrate is preferably 2 pm or more and 35 pm or less, more preferably 3 pm or more and 30 pm or less, still more preferably 4 pm or more and 25 pm or less, and particularly preferably 5 pm or more and 20 pm or less. When the average thickness of the negative substrate is within the above range, it is possible to enhance the energy density per volume of a secondary battery while increasing the strength of the negative substrate.

The negative active material layer contains a negative active material. The negative active material layer contains optional components such as a conductive agent, a binder, a thickener, and a filler, if necessary. The optional components such as a conductive agent, a binder, a thickener, and a filler can be selected from the materials exemplified for the positive electrode.

The negative active material layer may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Ta, Hf, Nb, or W as a component other than the negative active material, the conductive agent, the binder, the thickener, and the filler.

The negative active material can be appropriately selected from known negative active materials. As the negative active material for a lithium ion secondary battery, a material capable of absorbing and releasing lithium ions is usually used. Examples of the negative active material include metal Li; metals or metalloids such as Si and Sn; metal oxides or metalloid oxides such as oxides of Si, oxides of Ti, and oxides of Sn; titanium-containing oxides such as $Li_4Ti_5O_{12}$, $LiTiO_2$, and $TiNb_2O_7$; polyphosphoric acid compounds; silicon carbides; and carbon materials such as graphite and non-graphitic carbon (easily graphitizable carbon or hardly graphitizable carbon). Among these materials, graphite, and non-graphitic carbon are preferable, and graphite is more preferable. In the negative active material layer, one of these materials may be used singly, or two or more of these materials may be used in mixture.

The term "graphite" refers to a carbon material in which an average lattice spacing ($d_{002}$) of a (002) plane determined by X-ray diffraction before charge-discharge or in a discharged state is 0.33 nm or more and less than 0.34 nm. Examples of the graphite include natural graphite and artificial graphite. Artificial graphite is preferable from the viewpoint that a material having stable physical properties can be obtained.

The term "non-graphitic carbon" refers to a carbon material in which the average lattice spacing ($d_{002}$) of the (002) plane determined by X-ray diffraction before charge-discharge or in the discharged state is 0.34 nm or more and 0.42 nm or less. Examples of the non-graphitic carbon include hardly graphitizable carbon and easily graphitizable carbon. Examples of the non-graphitic carbon include a resin-derived material, a petroleum pitch or a material derived from petroleum pitch, a petroleum coke or a material derived from petroleum coke, a plant-derived material, and an alcohol derived material.

In this regard, the "discharged state" of the carbon material means a state discharged such that lithium ions that can be occluded and released in association with charge-discharge are sufficiently released from the carbon material that is the negative active material. For example, the "discharged state" refers to a state where the open circuit voltage is 0.7 V or higher in a half cell that has, for use as a working electrode, a negative electrode containing a carbon material as a negative active material, and has metal Li for use as a counter electrode.

The "hardly graphitizable carbon" refers to a carbon material in which the $d_{002}$ is 0.36 nm or more and 0.42 nm or less.

The "easily graphitizable carbon" refers to a carbon material in which the $d_{002}$ is 0.34 nm or more and less than 0.36 nm.

The negative active material is typically particles (powder). The average particle size of the negative active material can be, for example, 1 nm or more and 100 pm or less. When the negative active material is a carbon material, a titanium-containing oxide, or a polyphosphoric acid compound, the average particle size thereof may be 1 pm or more and 100 pm or less. When the negative active material is Si, Sn, an oxide of Si, an oxide of Sn, or the like, the average particle size thereof may be 1 nm or more and 1 pm or less. By setting the average particle size of the negative active material to be equal to or greater than the lower limit, the negative active material is easily produced or handled. By setting the average particle size of the negative active material to be equal to or less than the upper limit, the electron conductivity of the positive active material layer is improved. A crusher or a classifier is used to obtain a powder with a predetermined particle size. A crushing method and a classification method can be selected from, for example, the methods exemplified for the positive electrode. When the negative active material is a metal such as metal Li, the negative active material may have the form of foil. The "average particle size" of the negative active material refers to a value (D50: median diameter) measured by the same method as the "average secondary particle size" of the positive active material described above.

The content of the negative active material in the positive active material layer is preferably 60% by mass or more and 99% by mass or less, more preferably 90% by mass or more and 98% by mass or less. When the content of the negative active material is in the above range, it is possible to achieve both high energy density and productivity of the negative active material layer.

(Separator)

The separator has a creep strain of 11% or more and 28% or less after holding a load of 2 MPa for 24 hours at a temperature of 65°C. The creep strain of the separator may be 12% or more and 27% or less, preferably 13% or more and 26% or less, more preferably 14% or more and 25% or less, and still more preferably 15% or more and 24% or less. When the creep strain of the separator is equal to or greater than the lower limit, depletion of the electrolyte in the voids of the positive active material layer due to excessive compression of the positive active material layer in the energy storage device is suppressed. On the other hand, when the creep strain of the separator is equal to or less than the upper limit, a decrease in electron conductivity in the positive active material layer or between the positive active material layer and another layer is suppressed. Therefore, when the creep strain of the separator is equal to or greater than the lower limit and equal to or less than the upper limit, the capacity retention ratio after the charge-discharge cycle is increased. The creep strain of the separator can be equal to or greater than any of the above lower limits and equal to or less than any of the above upper limits.

The creep strain of the separator can be adjusted by the material of the separator, the manufacturing method (wet stretching method, dry stretching method, etc.), the porosity, the pore size, the pore distribution, the pore shape, the thickness, the material, the porosity, the thickness, and the like of the inorganic particle layer when the separator includes the inorganic particle layer.

Examples of the separator include a separator including only a resin substrate layer, a separator including only an inorganic particle layer (substrate layer containing inorganic particles), and a separator including a resin substrate layer and an inorganic particle layer, and the separator including the resin substrate layer and the inorganic particle layer is preferable. By using such a separator, the capacity retention ratio after the charge-discharge cycle can be further increased. By using the separator including the substrate layer and the inorganic particle layer, the creep strain can be easily adjusted within a predetermined range.

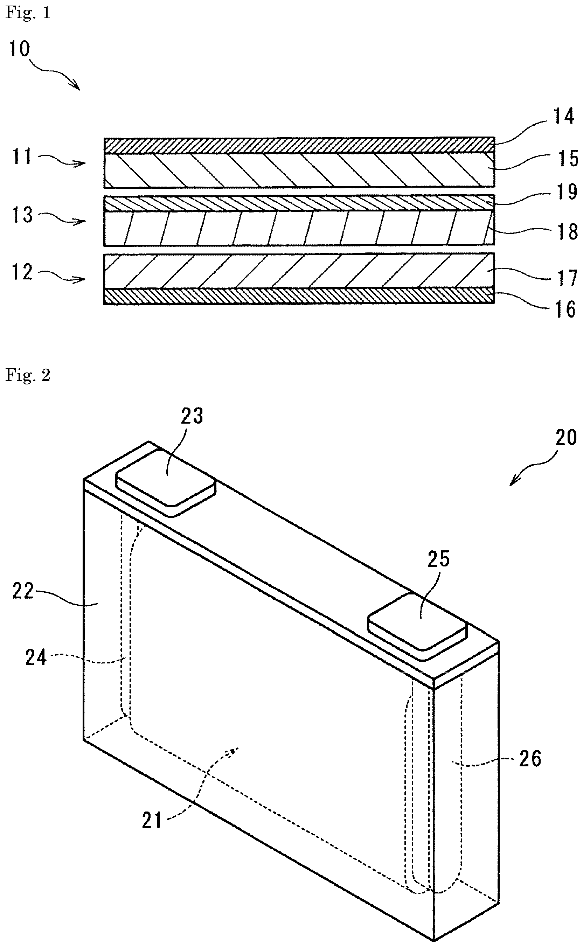

In the energy storage device according to an embodiment of the present invention, it is preferable that the separator includes the inorganic particle layer, and the positive active material layer of the positive electrode and the inorganic particle layer of the separator are arranged to face each other. An embodiment of an electrode assembly (positive electrode, negative electrode, and separator) having such a configuration is illustrated in Fig. 1. An electrode assembly 10 illustrated in Fig. 1 includes a positive electrode 11, a negative electrode 12, and a separator 13. The separator 13 is disposed between the positive electrode 11 and the negative electrode 12. In other words, in the electrode assembly 10, the positive electrode 11, the separator 13 and the negative electrode 12 are stacked in this order. In Fig. 1, a space between the positive electrode 11 and the separator 13 and a space between the negative electrode 12 and the separator 13 are separated from each other; however, these are actually stacked in a state of being in direct contact with each other. The positive electrode 11 includes a positive substrate 14, and a positive active material layer 15 stacked on one surface side of the positive substrate 14. The negative electrode 12 includes a negative substrate 16 and a negative active material layer 17 stacked on one surface side of the negative substrate 16. The positive active material layer 15 and the negative active material layer 17 are arranged so as to face each other with the separator 13 interposed therebetween. The separator 13 includes a substrate layer 18, and an inorganic particle layer 19 stacked on one surface side of the substrate layer 18. The positive active material layer 15 and the inorganic particle layer 19 are arranged to face each other.

Unlike the electrode assembly 10 of the embodiment illustrated in Fig. 1, the positive active material layer may be provided on each of both surfaces of the positive substrate, the negative active material layer may be provided on each of both surfaces of the negative substrate, and the inorganic particle layer may be provided on each of both surfaces of the substrate layer of the separator. In the electrode assembly 10 of the embodiment illustrated in Fig. 1, the separator 13 including a single layer of an inorganic particle layer is also included in a mode in which the separator has the inorganic particle layer, and the positive active material layer and the inorganic particle layer are arranged to face each other.

Examples of the form of the substrate layer of the separator include a woven fabric, a nonwoven fabric, and a porous resin film. Among these shapes, a porous resin film is preferable from the viewpoint of strength and the like. Examples of the material of the substrate layer of the separator include polyolefins such as polyethylene and polypropylene, polyimides, and aramids, and among these, polyolefins are preferable. As the substrate layer of the separator, a material obtained by combining these resins may be used. The substrate layer of the separator may contain components other than the resin, such as fibers composed of an inorganic compound.

When the substrate layer of the separator is a porous resin film, examples of means for porosizing the resin film in the production process include dry stretching in which stretching (for example, uniaxial stretching) is performed after drying, and wet stretching in which stretching (for example, biaxial stretching) is performed in a wet state (for example, a state in which a resin as a raw material and a solvent are mixed).

The average thickness of the substrate layer of the separator is preferably 1 pm or more and 30 pm or less, and more preferably 3 pm or more and 15 pm or less. When the average thickness of the substrate layer of the separator is within the above range, it is possible to achieve both sufficient strength and high energy density.

The average thickness of each of the "substrate layer" of the separator and the "inorganic particle layer" and the "separator" of the separator described later is an average value of thicknesses measured at arbitrary five points.

The inorganic particle layer of the separator contains inorganic particles. The inorganic particles are particles composed of an inorganic compound. Examples of the inorganic compounds include oxides such as iron oxide, silicon oxide, aluminum oxide, titanium oxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, simple substances or complexes of these substances may be used alone, or two or more thereof may be used in mixture. Among these inorganic compounds, the silicon oxide, aluminum oxide, or aluminosilicate is preferable from the viewpoint of the safety of the energy storage device. The inorganic particles preferably have a mass loss of 5% or less in the case of temperature increase from room temperature to 500°C under the air atmosphere of 1 atm, and more preferably have a mass loss of 5% or less in the case of temperature increase from room temperature to 800°C.

In the inorganic particle layer, the inorganic particles are preferably a main component of the inorganic particle layer. The main component refers to a component having the largest content on a mass basis. The inorganic particle layer may be a layer containing the inorganic particles and a binder. The inorganic particle layer may be a resin substrate layer containing the inorganic particles. The content of the inorganic particles in the inorganic particle layer is preferably 50% by mass or more and 99% by mass or less, more preferably 70% by mass or more and 97% by mass or less. When the content of the inorganic particles in the inorganic particle layer is equal to or greater than the lower limit, the capacity retention ratio after the charge-discharge cycle can be further increased. In addition, the content of the inorganic particles in the inorganic particle layer is equal to or less than the upper limit, thereby causing, for example, the presence of a sufficient binder or the like to sufficiently fix the inorganic particles to the inorganic particle layer.

As the binder in the inorganic particle layer, those exemplified as the binder in the positive active material layer, polyvinyl alcohol, polyvinyl ester, and the like can be used. The content of the binder in the inorganic particle layer is, for example, preferably 1% by mass or more and 50% by mass or less, and more preferably 3% by mass or more and 30% by mass or less.

When the separator includes the resin substrate layer and the inorganic particle layer, the upper limit of the average thickness (when there are two or more inorganic particle layers in one separator, the total average thickness) of the inorganic particle layer is preferably 8 pm, and more preferably 6 pm. By setting the average thickness of the inorganic particle layer to be equal to or less than the upper limit, the creep strain of the separator can be easily adjusted to a range of 11% or more and 28% or less. The lower limit of the average thickness of the inorganic particle layer is preferably 1 pm, and more preferably 3 pm. The average thickness of the inorganic particle layer may be in a range of equal to or greater than any of the above lower limits and equal to or less than any of the above upper limits.

When the separator includes the resin substrate layer and the inorganic particle layer, the lower limit of a ratio (substrate layer/inorganic particle layer) of the average thickness of the substrate layer to the average thickness (the total average thickness when there are two or more inorganic particle layers in one separator) of the inorganic particle layer in the separator is preferably 1.5, and more preferably 2.0. By setting the ratio (substrate layer/inorganic particle layer) in the separator to be equal to or greater than the lower limit, that is, by setting the substrate layer to a relatively sufficient thickness, the creep strain of the separator can be easily adjusted to a range of 11% or more and 28% or less. For example, in the separator including substrate layer and the inorganic particle layer, by making the thickness of the substrate layer relatively large, the creep strain of the separator tends to increase, that is, tend to be soft. Conversely, by making the thickness of the substrate layer relatively thin, the creep strain of the separator tends to be small, that is, tends to be hard. The upper limit of the ratio (substrate layer/inorganic particle layer) may be 5.0, 4.0, or 3.0. The ratio (substrate layer/inorganic particle layer) may be in a range of equal to or greater than any of the above lower limits and equal to or less than any of the above upper limits.

The porosity of the separator (the entire separator) is preferably 80 vol% or less, more preferably 70 vol% or less, still more preferably 65 vol% or less from the viewpoint of strength and the like. On the other hand, the porosity of the separator is preferably 20 vol% or more, more preferably 30 vol% or more, still more preferably 40 vol% or more from the viewpoint of discharge performance and the like. The porosity of the separator may be in a range of equal to or greater than any of the above lower limits and equal to or less than any of the above upper limits. The term "porosity" herein is a volume-based value, and means a value measured with a mercury porosimeter.

The average thickness of the separator (the entire separator) is, for example, preferably 5 pm or more and 40 pm or less, and more preferably 5 pm or more and 30 pm or less. By setting the average thickness of the separator to be equal to or greater than the lower limit, sufficient strength and the like can be secured. On the other hand, by setting the average thickness of the separator to be equal to or less than the upper limit, thereby allowing for an increase in the energy density of the energy storage device.

(Electrolyte)

A nonaqueous electrolyte energy storage device such as a nonaqueous electrolyte secondary battery includes a nonaqueous electrolyte as an electrolyte. The nonaqueous electrolyte can be appropriately selected from known nonaqueous electrolytes. For the nonaqueous electrolyte, a nonaqueous electrolyte solution may be used. The nonaqueous electrolyte solution contains a nonaqueous solvent and an electrolyte salt dissolved in the nonaqueous solvent. An electrolyte such as a nonaqueous electrolyte solution is usually impregnated in each void of the positive active material layer, the negative active material layer, and the separator.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, those in which some hydrogen atoms contained in these compounds are substituted with halogen may be used.

Examples of the cyclic carbonate include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among them, EC is preferable.

Examples of the chain carbonate include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among them, EMC is preferable.

As the nonaqueous solvent, the cyclic carbonate or the chain carbonate is preferably used, more preferably, the cyclic carbonate and the chain carbonate are used in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When the cyclic carbonate and the chain carbonate are used in combination, a volume ratio of the cyclic carbonate to the chain carbonate (cyclic carbonate: chain carbonate) is preferably in a range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these, a lithium salt is preferable.

Examples of the lithium salt include inorganic lithium salts such as $LiPF_6$, $LiPO_2F_2$, $LiBF_4$, $LiClO_4$, and $LiN(SO_2F)_2$, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as $LiSO_3CF_3$, $LiN(SO_2CF_3)_2$, $LiN(SO_2C_2F_5)_2$, $LiN(SO_2CF_3)(SO_2C_4F_9)$, $LiC(SO_2CF_3)_3$, and $LiC(SO_2C_2F_5)_3$. Among these, inorganic lithium salts are preferable, and $LiPF_6$ is more preferable.

The content of the electrolyte salt in the nonaqueous electrolyte solution is, at 20°C under 1 atm, preferably 0.1 mol/dm$^3$ or more and 2.5 mol/dm$^3$ or less, more preferably 0.3 mol/dm$^3$ or more and 2.0 mol/dm$^3$ or less, still more preferably 0.5 mol/dm$^3$ or more and 1.7 mol/dm$^3$ or less, particularly preferably 0.7 mol/dm$^3$ or more and 1.5 mol/dm$^3$ or less. When the content of the electrolyte salt is in the above range, it is possible to increase the ionic conductivity of the nonaqueous electrolyte solution.

The nonaqueous electrolyte solution may contain an additive, besides the nonaqueous solvent and the electrolyte salt. Examples of the additive include oxalic acid salts such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethylsulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of these additives may be used, or two or more thereof may be used in mixture.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to a total mass of the nonaqueous electrolyte solution. The content of the additive falls within the above range, thereby making it possible to improve capacity retention performance or cycle performance after high-temperature storage, and to further improve safety.

As the nonaqueous electrolyte, a nonaqueous electrolyte solution and a solid electrolyte may be used concurrently.

The solid electrolyte can be selected from arbitrary materials with ionic conductivity, which are solid at normal temperature (for example, from 15°C to 25°C), such as lithium, sodium and calcium. Examples of the solid electrolyte include a sulfide solid electrolyte, an oxide solid electrolyte, an oxynitride solid electrolyte, polymer solid electrolyte, and a gel polymer electrolyte.

Examples of the sulfide solid electrolyte include $Li_2S-P_2S_5$, $LiI-Li_2S-P_2S_5$, and $Li_{10}Ge-P_2S_{12}$ in the case of a lithium ion secondary battery.

(Application of load to electrode assembly)

The electrode assembly may be in a state where a load is applied to the electrode assembly in a thickness direction (stacking direction). Here, the thickness direction of the electrode assembly is a direction in which the positive electrode, the negative electrode, and the separator are stacked with each other, and is a longitudinal direction in Fig. 1. The lower limit of the pressure applied to the electrode assembly in the state where the load is applied to the electrode assembly in the thickness direction is preferably 0.1 MPa, and more preferably 0.2 MPa. By applying the load to the electrode assembly at a pressure equal to or greater than the lower limit, electron conductivity in the positive active material layer or between the positive active material layer and the positive substrate or the like can be enhanced. The upper limit of the pressure applied to the electrode assembly may be, for example, 5 MPa, and may be 2 MPa, 1 MPa, 0.5 MPa, or 0.3 MPa. By applying the load to the electrode assembly at a pressure equal to or less than the upper limit, charge-discharge performance can be enhanced. The pressure may be equal to or more than any of the above lower limits and equal to or less than any of the above upper limits.

The electrode assembly can be pressurized (application of load) by, for example, a pressurizing member that pressurizes the case from the outside. The pressurizing member may be a restraining member that restrains the shape of the case. The pressurizing member (restraining member) is provided so as to sandwich and then pressurize the electrode assembly from both surfaces in the thickness direction via the case, for example. The surfaces of the electrode assembly to be pressurized have contact with the inner surface of the case directly or with another member interposed therebetween. Thus, the electrode assembly is pressurized by pressurizing the case. Examples of the pressurizing member include a restraining band or a metallic frame. For example, a metallic frame may be configured to apply an adjustable load with a bolt or the like. In addition, a plurality of secondary batteries (energy storage devices) may be arranged side by side in the thickness direction of the electrode assembly, and fixed with the use of a frame or the like with the plurality of secondary batteries pressurized from both ends in the thickness direction. Here, the pressure applied to the electrode assembly is a value measured by the following method.

(i) Case where load is applied to energy storage device by pressurizing member or the like

First, in a state where the load is applied by the pressurizing member or the like, the energy storage device is discharged at a constant current to the lower limit voltage under normal usage, and then installed in an X-ray computed tomography (CT) apparatus. Scanning is performed along a direction parallel to the thickness direction of the electrode assembly to check whether or not the electrode assembly is in direct or indirect contact with the inner surface of the case. When the electrode assembly is not in direct or indirect contact with the inner surface of the case, the pressure applied to the electrode assembly is set to 0 MPa. When the electrode assembly is in direct or indirect contact with the inner surface of the case, the load applied to the electrode assembly is measured using an autograph in the following procedure. The energy storage device to which the load is applied by the pressurizing member or the like is installed on an autograph. A load sufficiently smaller than the load by the pressurizing member or the like is applied to the energy storage device by the autograph. In this state, that is, while the thickness of the energy storage device is maintained, the load by the pressurizing member or the like is released, and an amount of change in the load measured by the autograph is defined as the load applied to the electrode assembly. A value obtained by dividing the load applied to the electrode assembly by an area of a contact surface between the autograph and the energy storage device is defined as the pressure applied to the electrode assembly. Usually, a load is applied to a pair of opposing surfaces of the energy storage device by the pressurizing member or the like, and an area of only one surface of the pair of surfaces is defined as an area of a surface to which the load is applied.

(ii) Case where no load is applied to energy storage device by pressurizing member or the like

In a case where, while the energy storage device is restrained by the restraining member, no load is applied by the restraining member, the pressure applied to the electrode assembly is measured by the following procedure. First, the energy storage device is discharged at a constant current to the lower limit voltage under normal usage, and then installed in an X-ray CT apparatus. Scanning is performed along a direction parallel to the thickness direction of the electrode assembly to check whether or not the electrode assembly is in direct or indirect contact with the inner surface of the case. When the electrode assembly is not in direct or indirect contact with the inner surface of the case, the pressure applied to the electrode assembly is set to 0 MPa. When the electrode assembly is in direct or indirect contact with the inner surface of the case, an X-ray transmission image of the electrode assembly is captured, and the maximum thickness of the electrode assembly in the stacking direction is measured. The energy storage device is disassembled, and the electrode assembly is taken out and installed in the autograph. A load is gradually applied to the electrode assembly by the autograph, and the electrode assembly is compressed to the maximum thickness in the thickness direction of the electrode assembly measured from an X-ray transmission image. At this time, the load measured by the autograph is defined as a load applied to the electrode assembly. A value obtained by dividing the measured load by an area of a contact surface between the autograph and the energy storage device is defined as the pressure applied to the electrode assembly. Usually, a load is applied to a pair of opposing surfaces of the electrode assembly by the case, and an area of only one surface of the pair of surfaces is defined as an area of a surface to which the load is applied.

(Application and the like)

The energy storage device according to an embodiment of the present invention has a high capacity retention ratio after the charge-discharge cycle. In general, in a conventional energy storage device, when charging and discharging at a high current density are repeated, a decrease in capacity retention ratio occurs remarkably. On the other hand, in the energy storage device according to an embodiment of the present invention, the capacity retention ratio in the case of repeating charging and discharging at a high current density is also improved. Therefore, the energy storage device can be suitably used as an energy storage device used for charging and discharging at a high current density. The energy storage device can be suitably used as, for example, an energy storage device in which at least one of charge and discharge with a current of 2C or more and further 3C or more may be performed. The upper limit of the current in at least one of charge and discharge is not particularly limited, and may be, for example, 20 C, 10 C, or 6 C.

Specific applications of the energy storage device according to an embodiment of the present invention where charge or discharge may be performed at a high current density include power sources for automobiles such as electric vehicles (EV), hybrid vehicles (HEV) and plug-in hybrid vehicles (PHEV).

The shape of the energy storage device of the present embodiment is not particularly limited, and examples thereof include cylindrical batteries, prismatic batteries, flat batteries, coin batteries and button batteries.

Fig. 2 illustrates an energy storage device 20 as an example of a prismatic battery. Fig. 2 is a view illustrating the inside of a case in a perspective manner. An electrode assembly 21 including a positive electrode and a negative electrode wound with a separator interposed therebetween is housed in a prismatic case 22. The positive electrode is electrically connected to a positive electrode terminal 23 via a positive electrode lead 24. The negative electrode is electrically connected to a negative electrode terminal 25 via a negative electrode lead 26.

<Energy storage apparatus>

The energy storage device according to the present embodiment can be mounted as an energy storage unit (battery module) configured by assembling a plurality of energy storage devices on a power source for automobiles such as EV, HEV, and PHEV, a power source for electronic devices such as personal computers and communication terminals, or a power source for power storage, or the like. In this case, the technique of the present invention may be applied to at least one energy storage device included in the energy storage unit.

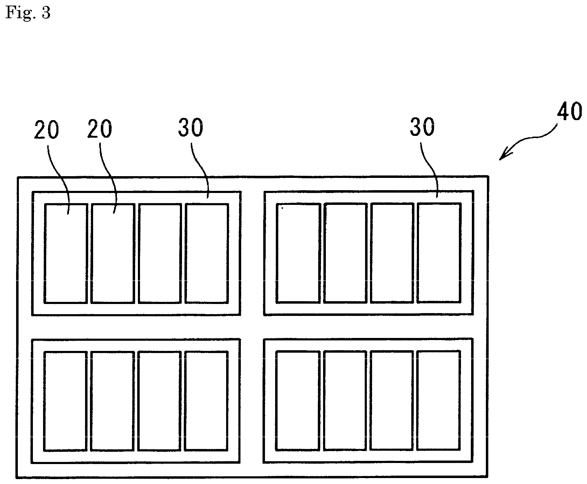

The energy storage apparatus according to the present embodiment includes the energy storage device according to this embodiment and a pressurizing member. Fig. 3 shows an example of an energy storage apparatus 40 formed by assembling energy storage units 30 in each of which two or more electrically connected energy storage devices 20 are assembled. The energy storage apparatus 40 may include a busbar (not illustrated) for electrically connecting two or more energy storage devices 20, a busbar (not illustrated) for electrically connecting two or more energy storage units 30, and the like. The energy storage unit 30 or the energy storage apparatus 40 may include a state monitor (not illustrated) that monitors the state of one or more energy storage devices 20. The energy storage apparatus 40 may not include the energy storage unit 30, and may include the two or more energy storage devices 20 and a bus bar (not illustrated) which electrically connects the two or more energy storage devices 20.

<Method for manufacturing energy storage device>

A method for manufacturing the energy storage device of the present embodiment can be appropriately selected from known methods. The manufacturing method includes, for example, preparing an electrode assembly, preparing an electrolyte, and housing the electrode assembly and the electrolyte in a case. The preparation of the electrode assembly includes: preparing a positive electrode, a negative electrode, and a separator, and forming an electrode assembly by stacking or winding the positive electrode and the negative electrode with a separator interposed therebetween.

Housing the electrolyte in a case can be appropriately selected from known methods. For example, when a nonaqueous electrolyte solution is used for the electrolyte, the method includes injecting the nonaqueous electrolyte solution from an inlet formed in the case and then sealing the inlet. The method for manufacturing the energy storage device may further include attaching a restraining member such as a binding member. Details of each member constituting the energy storage device are as described above.

<Other embodiments>

It is to be noted that the energy storage device according to the present invention is not to be considered limited to the embodiment mentioned above, and various changes may be made without departing from the scope of the present invention. For example, to the configuration of one embodiment, the configuration of another embodiment can be added, and a part of the configuration of one embodiment can be replaced by the configuration of another embodiment or a well-known technique. Furthermore, a part of the configuration according to one embodiment can be deleted. In addition, a well-known technique can be added to the configuration according to one embodiment.

While the case where the energy storage device is used as a nonaqueous electrolyte secondary battery (for example, lithium ion secondary battery) that can be charged and discharged has been described in the embodiment mentioned above, the type, shape, size, capacity, and the like of the energy storage device are arbitrary. The present invention can also be applied to capacitors such as various secondary batteries, electric double layer capacitors, or lithium ion capacitors.

EXAMPLES

Hereinafter, the present invention will be described more specifically with reference to Examples. The present invention is not limited to the following Examples.

[Example 1]

(Preparation of positive electrode)

A positive composite paste was prepared with the use of $LiNi_{1/3}Co_{1/3}Mn_{1/3}O_2$ as a positive active material, acetylene black as a conductive agent, a PVDF as a binder, and an N-methylpyrrolidone (NMP) as a dispersion medium. It is to be noted that the mass ratios of the positive active material, the conductive agent, and the binder were set to be 93 : 4 : 3 (in terms of solid content). The positive composite paste was applied to both surfaces of an aluminum foil as a positive substrate, and dried. Thereafter, roll pressing was performed to obtain a positive electrode.

As the positive active material ($LiNi_{1/3}Co_{1/3}Mn_{1/3}O_2$), primary particles (single particle-based particles) having an average primary particle size of 2.2 pm and not substantially aggregated were used.

(Preparation of negative electrode)

Graphite as a negative active material, an SBR as a binder, CMC as a thickener, and water as a dispersion medium were mixed to prepare a negative composite paste. It is to be noted that the mass ratios of the negative active material, the binder, and the thickener were set to be 98 : 1 : 1 (in terms of solid content). The negative composite paste was applied to both surface of a copper foil as a negative substrate, and dried. Thereafter, roll pressing was performed to obtain a negative electrode.

(Nonaqueous electrolyte solution)

$LiPF_6$ was dissolved at a concentration of 1.2 mol/dm$^3$ in a solvent obtained by mixing an ethylene carbonate, a dimethyl carbonate, and an ethyl methyl carbonate at a volume ratio of 30 : 35 : 35 to obtain a nonaqueous electrolyte solution.

(Separator)

As a separator, one in which an inorganic particle layer containing aluminum oxide as inorganic particles and polyvinyl alcohol as a binder was formed on one surface of a substrate layer including a polyolefin porous resin film was used. The creep strain after holding a load of 2 MPa for 24 hours at a temperature of 65°C in the separator was 11%, and the porosity was 52%.

(Assembly of energy storage device)

The positive electrode, the negative electrode, and the separator were used to obtain a wound electrode assembly. The positive active material layer of the positive electrode and the inorganic particle layer of the separator were arranged to face each other to produce an electrode assembly. The electrode assembly was housed in a prismatic case, and a nonaqueous electrolyte solution was injected to seal the case. An energy storage device (secondary battery) of Example 1 was obtained in a state where the electrode assembly was pressurized at 0.5 MPa by the pressurizing member from both surfaces of the case.

[Examples 2 to 4, Comparative Examples 1 to 3]

Each of the energy storage devices of Examples 2 to 4 and Comparative Examples 1 to 3 was obtained similarly to Example 1 except that a separator in which the creep strain after holding a load of 2 MPa at a temperature of 65°C for 24 hours was the value shown in Table 1 was used as the separator.

[Comparative Examples 4 to 7]

Each of the energy storage devices of Comparative Examples 4 to 7 was obtained similarly to Example 1 except that $LiNi_{1/3}Co_{1/3}Mn_{1/3}O_2$ as secondary particles having an average primary particle size of 0.5 pm and an average secondary particle size of 4 $\mu$m was used as the positive active material, and that a separator in which the creep strain after holding a load of 2 MPa at a temperature of 65°C for 24 hours was the value shown in Table 1 was used as the separator.

The separator used in each of Examples and Comparative Examples was a commercially available separator having a two-layer structure having an inorganic particle layer on one surface of the substrate layer, and the porosity was in a range of 40% or more and 60% or less.

[Evaluation]

(Initial charge-discharge)

Each of the energy storage devices obtained was subjected to constant current charge up to 4.1 V at a current of 1.0 C under a temperature environment of 25°C, and then to constant voltage charge at 4.1 V. With regard to the charge termination conditions, charge was performed until the total charge time reached 3 hours. A pause time of 10 minutes was provided, and then constant current discharge was performed to 2.5 V at a current of 1.0 C. The discharge capacity at this time was defined as the "initial discharge capacity".

(Charge-discharge cycle test)

Next, each energy storage device was subjected to the following charge-discharge cycle test. At 60°C, constant current charge was performed up to SOC 85% at a charge current of 4.0 C. Thereafter, constant current discharge was performed up to SOC 15% at a discharge current of 4.0 C without pause. The charging and discharging steps constituted one cycle, and the cycle was performed 1430 cycles.

(Capacity retention ratio after charge-discharge cycle test)

Each energy storage device after the charge-discharge cycle test was charged and discharged similarly to the above "Initial charge-discharge". The discharge capacity at this time was taken as the discharge capacity after the charge-discharge cycle test. The percentage of the discharge capacity after the charge-discharge cycle test with respect to the initial discharge capacity was calculated, and regarded as the capacity retention ratio after the charge-discharge cycle (%). Two energy storage devices were prepared for each of Examples and Comparative Examples, and the initial charge-discharge and the charge-discharge cycle test were performed to calculate the average value of the capacity retention ratios of the two energy storage devices after the charge-discharge cycle, and the average value was taken as the average capacity retention ratio (%) after the charge-discharge cycle in each of Examples and Comparative Examples. The results are shown in Table 1.

[Table 1]

| | Positive active material | | Separator | Average capacity retention ratio (%) |
| --- | --- | --- | --- | --- |
| | Average primary particle size ($\mu$m) | - | Creep strain (%) | |
| Comparative Example 1 | 2.2 | Single particle-based particle | 8 | 89.0 |
| Comparative Example 2 | 2.2 | Single particle-based particle | 10 | 89.1 |
| Example 1 | 2.2 | Single particle-based particle | 11 | 89.8 |
| Example 2 | 2.2 | Single particle-based particle | 16 | 90.3 |
| Example 3 | 2.2 | Single particle-based particle | 22 | 90.1 |
| Example 4 | 2.2 | Single particle-based particle | 28 | 89.8 |
| Comparative Example 3 | 2.2 | Single particle-based particle | 31 | 88.9 |
| Comparative Example 4 | 0.5 | Secondary particle | 10 | 88.2 |
| Comparative Example 5 | 0.5 | Secondary particle | 16 | 88.0 |
| Comparative Example 6 | 0.5 | Secondary particle | 22 | 88.1 |
| Comparative Example 7 | 0.5 | Secondary particle | 28 | 87.9 |

As shown in Table 1, comparison of Comparative Examples 4 to 7 shows that when the average primary particle size of the positive active material is less than 1.0 pm, the creep strain of the separator does not affect the average capacity retention ratio after the charge-discharge cycle. On the other hand, comparison of Examples 1 to 4 and Comparative Examples 1 to 3 shows that when the average primary particle size of the positive active material is 1.0 pm or more, the average capacity retention ratio of the energy storage device after the charge-discharge cycle is increased by using a separator having a creep strain in the range of 11% or more and 28% or less. Also, comparison between Examples 1 to 4 and Comparative Examples 4 to 7 and the like show that when the average primary particle size of the positive active material is 1.0 pm or more, the average capacity retention ratio of the energy storage device after the charge-discharge cycle is increased.

INDUSTRIAL APPLICABILITY

The present invention can be applied to an energy storage device used as a power source for electronic devices such as personal computers and communication terminals, motor vehicles, and the like.

DESCRIPTION OF REFERENCE SIGNS

10: electrode assembly
11: positive electrode
12: negative electrode
13: separator
14: positive electrode substrate
15: positive active material layer
16: negative substrate
17: negative active material layer
18: substrate layer
19: inorganic particle layer
20: energy storage device
21: electrode assembly
22: case
23: positive electrode terminal
24: positive electrode lead
25: negative electrode terminal
26: negative electrode lead
30: energy storage unit
40: energy storage apparatus

**Claims**

1.  An energy storage device comprising:

    a positive electrode;
    a negative electrode; and
    a separator disposed between the positive electrode and the negative electrode,
    wherein the positive electrode includes a positive active material layer containing a positive active material having an average primary particle size of 1.0 pm or more, and
    a creep strain in the separator after a load of 2 MPa is held for 24 hours at a temperature of 65°C is 11% or more and 28% or less.

2.  The energy storage device according to claim 1, wherein the positive active material is a secondary particle having a ratio of an average secondary particle size to the average primary particle size of 5 or less, or a primary particle that is not substantially aggregated.

3.  The energy storage device according to claim 1 or 2, wherein

    the separator includes an inorganic particle layer, and
    the positive active material layer and the inorganic particle layer are arranged so as to face each other.

4.  The energy storage device according to claim 1, 2, or 3, wherein the average primary particle size of the positive active material is 6.0 pm or less.

5. The energy storage device according to any one of claims 1 to 4, wherein the electrode assembly is in a state where a load of 0.1 MPa or more is applied in a stacking direction.

6. An energy storage apparatus comprising:

   the energy storage device according to any one of claims 1 to 5; and
   a pressurizing member.

Fig. 1

Fig. 2

Fig. 3

## INTERNATIONAL SEARCH REPORT

| International application No. |
|---|
| **PCT/JP2022/016439** |

### A. CLASSIFICATION OF SUBJECT MATTER

***H01M 4/13***(2010.01)i; ***H01G 11/24***(2013.01)i; ***H01G 11/52***(2013.01)i; ***H01M 10/04***(2006.01)i; ***H01M 10/052***(2010.01)i; ***H01M 50/434***(2021.01)i; ***H01M 50/443***(2021.01)i; ***H01M 50/451***(2021.01)i; ***H01M 50/489***(2021.01)i

FI: H01M10/04 Z; H01M10/052; H01M4/13; H01M50/489; H01M50/451; H01G11/52; H01G11/24; H01M50/443 M; H01M50/434

According to International Patent Classification (IPC) or to both national classification and IPC

### B. FIELDS SEARCHED

Minimum documentation searched (classification system followed by classification symbols)

H01M4/13; H01G11/24; H01G11/52; H01M10/04; H01M10/052; H01M50/434; H01M50/443; H01M50/451; H01M50/489

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2016-164869 A (PANASONIC CORP) 08 September 2016 (2016-09-08) claim 1, paragraph [0031] | 1-6 |
| A | JP 2020-57596 A (TORAY INDUSTRIES) 09 April 2020 (2020-04-09) paragraph [0046] | 1-6 |
| A | JP 2014-127284 A (TOYOTA MOTOR CORP) 07 July 2014 (2014-07-07) claims 1-2, paragraphs [0012]-[0013] | 1-6 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 June 2022** | **21 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/016439**

| Patent document cited in search report | | | Publication date (day/month/year) | Patent family member(s) | Publication date (day/month/year) |
|---|---|---|---|---|---|
| JP | 2016-164869 | A | 08 September 2016 | US 2016/0254536 A1 claim 1, paragraph [0040] CN 105932276 A | |
| JP | 2020-57596 | A | 09 April 2020 | (Family: none) | |
| JP | 2014-127284 | A | 07 July 2014 | (Family: none) | |

Form PCT/ISA/210 (patent family annex) (January 2015)

**EP 4 336 581 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009199793 A